# EUROPÄISCHE PATENTSCHRIFT

(11) **EP 1 563 353 B1**
(45) Veröffentlichungstag und Bekanntmachung des Hinweises auf die Patenterteilung: **07.04.2010**
(21) Anmeldenummer: 03789048.0
(22) Anmeldetag: 17.11.2003
(51) Int. Cl.: G05B 23/02

(54) **DRAHTLOSE KOMMUNIKATION**
WIRELESS COMMUNICATION
COMMUNICATION SANS FIL

(30) Priorität: 15.11.2002 DE 10253572
(43) Veröffentlichungstag der Anmeldung: 17.08.2005
(73) Patentinhaber: VEGA Grieshaber KG, 77709 Wolfach (DE)
(72) Erfinder: DECK, Thomas, 77709 Wolfach (DE); SKOWAISA, Jürgen, 77761 Schiltach (DE); SACK, Holger, 77761 Schiltach (DE); LAUN, Robert, 77756 Hausach (DE)
(74) Vertreter: Kopf, Korbinian Paul
(86) Internationale Anmeldenummer: PCT/EP2003/012854
(87) Internationale Veröffentlichungsnummer: WO 2004/047043

(56) Entgegenhaltungen:
- WO-A-01/01366
- WO-A-96/12993
- DE-A- 10 032 774
- US-A- 5 257 190
- US-A- 5 745 049
- US-A- 5 765 995
- US-A1- 2001 028 305
- US-A1- 2001 045 892
- US-A1- 2002 082 755

## Beschreibung

### TECHNISCHES GEBIET

Die vorliegende Erfindung betrifft eine Sensoreinheit mit einem Messsignalaufnehmer, der ein Messsignal erfasst, einem mit dem Messsignalaufnehmer verbundenen A/D-Wandler zum Digitalisieren des erfassten Messsignals und einer Sende- und/oder Empfangseinrichtung zur drahtlosen Datenübermittlung an und/oder von einem Umgebungsgerät. Die Steuerung der genannten Komponenten erfolgt mittels eines Prozessors. Die Erfindung betrifft ferner ein Datenkommunikationssystem, das mehrere Sensoreinheiten der genannten Art sowie ein Umgebungsgerät umfasst. Außerdem betrifft die vorliegende Erfindung auch ein Umgebungsgerät, das zur drahtlosen Kommunikation (umfassend Sende- und/oder Empfangsbetrieb) mit zumindest einer Sensoreinheit der genannten Art ausgebildet ist und in der eine Auswerteeinheit integriert ist oder die mit einer Auswerteeinheit gekoppelt werden kann.

### HINTERGRUND DER ERFINDUNG

Sensoren finden in einem weitläufigen technischen Umfeld Verwendung. So werden heutzutage insbesondere in der Automatisierungs- und Prozesstechnik Sensoren zum Messen von Prozessparametem wie Füllstand, Druck, Temperatur usw. verwendet. Zur Beeinflussung der Prozessparameter dienen sog. Aktoren, wie z. B. Ventile, Heizelemente oder dergleichen. Gemäß dem Stand der Technik werden die von den Sensoren ermittelten Messwerte von einem Prozessleitsystem ausgewertet und die Aktoren angesteuert, um den Prozess im vorgegebenen Prozessfenster ablaufen lassen zu können. Da die Sensoren oftmals an räumlich weit voneinander liegenden Stellen einer Fertigungsanlage angeordnet sind, ist eine drahtgebundene Kommunikation der Sensoren mit dem Prozessleitsystem sowie mit Bedien- und Anzeigeeinrichtungen oftmals mit einem hohen Kostenaufwand verbunden.

Daraus resultierend wurden Anstrengungen unternommen, die Kommunikation der Sensoren mit dem Prozessleitsystem sowie mit Bedien- und Anzeigeeinrichtungen auf drahtlose Weise, beispielsweise auf Basis des Bluetooth-Standards, zu realisieren.

Die DE 100 32 774 A1 beschreibt ein System, bei dem sog. Feldgeräte für die Prozessautomatisierung mit einer Bedien- und Anzeigeeinrichtung zur Dateneingabe und -anzeige per Funk verbunden sind. Gemäß dieser Druckschrift ist die Bedien- und Anzeigeeinrichtung als separat tragbare Einheit ausgebildet. Weiter offenbart diese Druckschrift, dass die Funkverbindung nach dem Bluetooth-Standard erfolgt. Nach einer Ausführungsform der genannten DE 100 32 774 A1, sind die Feldgeräte einer Prozessanlage ausschließlich über Funk mit einem Knotenpunkt verbunden, der über einen Datenbus mit dem Prozessleitsystem verknüpft ist. Im Ergebnis übermitteln die Feldgeräte die aktuellen Messwerte per Funk an das Prozessleitsystem, das wiederum auf Basis der Messwerte die verschiedenen Aktoren angesteuert.

In der DE 199 33 814 A1 ist eine Anordnung zur drahtlosen Informationsübertragung für eine Vielzahl von Sensoren und/oder Aktoren auf eine Maschine bekannt. Die bekannte Anordnung umfasst mehrere Teilnehmer wie Sensoren oder Aktoren sowie eine Basisstation. Die Basisstation strahlt ein vorzugsweise nach dem DSSS-Verfahren erzeugtes, breitbandiges Hochfrequenzsignal ab. Die Teilnehmer befinden sich in unterschiedlichen Entfernungen von der Basisstation. Die Teilnehmer codieren das empfangene Hochfrequenzsignal gemäß dem SDMA-Verfahren, modulieren dieses und reflektieren es zur Basisstation zurück. In der Basisstation erfolgt eine Signalkorrelation und Demodulation.

Nachteilig an den aus dem Stand der Technik bekannten Feldgeräten oder Sensoreinheiten ist, dass jede Sensoreinheit mit einem Prozessor ausgestattet ist, der sowohl die Aufgabe der Steuerung von Messsignalaufnehmer, A/D-Wandler und Schnittstellen als auch die Verarbeitung der Messsignale übernehmen muss.

Prozessoren, die diese Aufgaben übernehmen können sind teuer in der Anschaffung und im Betrieb.

### DARSTELLUNG DER VORLIEGENDEN ERFINDUNG

Gemäß einem ersten Aspekt der vorliegenden Erfindung umfasst eine erfindungsgemäße Sensoreinheit einen Messsignalaufnehmer, der ein Messsignal erfasst. Mit dem Messsignalaufnehmer ist ein A/D-Wandler verbunden, der die erfassten Messsignale digitalisiert. Mittels einer Sende- und/oder Empfangseinrichtung, die mit dem A/D-Wandler gekoppelt ist, erfolgt eine drahtlose Datenübermittlung an ein Umgebungsgerät. In der Sensoreinheit ist ein Prozessor vorhanden, der den Messsignalaufnehmer, den A/D-Wandler und die Sende- und/oder Empfangseinrichtung derart ansteuert, dass das erfasste Messsignal digitalisiert und anschließend direkt über die Sende- und/oder Empfangseinrichtung zum Umgebungsgerät drahtlos übertragen wird. Dieses Übertragungsgerät besitzt gemäß einer beispielhaften ersten Alternative eine Auswerteeinheit, die das digitalisierte Messsignal zu einem Messwert weiterverarbeitet. Eine zweite Alternative sieht vor, dass die Auswerteeinheit mit dem Umgebungsgerät gekoppelt ist, aber nicht integraler Bestandteil des Umgebungsgerätes ist.

Der Erfindung liegt der Gedanke zugrunde, eine Sensoreinheit bereitzustellen, die kostengünstig herzustellen und zu betrieben ist. Insbesondere kann durch die "Auslagerung" der Auswertung eines Messsignals aus der Sensoreinheit u.U. trotz der zu betreibenden Sende- und/oder Empfangseinrichtung eine sogenannte Niedrigenergieversorgung ausreichen, um den Sensor mit Energie zu versorgen. Insbesondere kann dann auch in einer beispielhaften Ausführungsform der vorliegenden Erfindung eine Energieversorgung über eine 4-20 mA Zwei-Draht-Schleife erfolgen. Wie bereits erwähnt, erfolgt erfindungsgemäß eine Übertragung der digitalisierten Messsignale direkt, d. h. ohne Signalverarbeitung nach der A/D-Wandlung, über die Sende- und/oder Empfangseinrichtung zum Umgebungsgerät. Dadurch kann ein aus dem Stand der Technik bekannter leistungsfähiger Prozessor einer Sensoreinheit, welcher sowohl Steuerungs- als auch Signalverarbeitungsaufgaben übernimmt, durch einen kleineren und weniger leistungsfähigeren und damit kostengünstigere und insbesondere weniger Leistung benötigende Prozessor ersetzt werden, der ausschließlich Steuerungsaufgaben übernimmt.

Die Signalverarbeitung des von der Sensoreinheit erhaltenen Messsignals wird in einer Auswerteeinheit, die in dem zentralen Umgebungsgerätes untergebracht ist oder mit diesem verbunden ist, durch einen leistungsfähigen Signalverarbeitungsprozessor bewerkstelligt. Wenn die Rede von Signalverarbeitungsprozessoren ist, so ist selbstverständlich ein Prozessor gemeint, der beispielsweise neben der Signalverarbeitung auch noch Steuerungsaufgabe übernehmen kann. Des weiteren ist aber auch denkbar, dass das Umgebungsgerät über einen separaten Steuerprozessor und über einen separaten Signalverarbeitungsprozessor verfügt. Im Resultat kann somit die eine Auswerteeinheit des Umgebungsgerätes die Signalverarbeitung von einer Vielzahl von Sensoreinheiten übernehmen. Jede einzelne Sensoreinheit ist dabei lediglich mit einem einfachen und kostengünstigen Steuerungsprozessor ausgerüstet, wobei die Auswerteeinheit über einen aufwendigen und leistungsfähigen Signalverarbeitungsprozessor verfügt.

Zusammengefasst können durch die Verwendung von weniger leistungsfähigen Steuerungsprozessoren somit die Herstellungskosten für eine Sensoreinheit wie auch deren Betriebskosten, beispielsweise aufgrund des geringeren Stromverbrauchs dieser Prozessoren, reduziert werden. Ein weiterer Vorteil der Erfindung besteht darin, dass mit dieser Anordnung die zur Verfügung stehende Rechenzeit besser genutzt wird. Aufgrund der verschiedenen Zykluszeiten der Sensoren besteht bei Sensoreinheiten mit integrierter Signalverarbeitung Leerlaufzeit, d. h. Zeit, in der keine Rechnerleistung zur Datenverarbeitung wie auch zur Steuerung benötigt wird. Wird die Signalverarbeitung von einer einzigen Auswerteeinheit übernommen, so kann die Prozessorleistung zur Signalauswertung entsprechend den unterschiedlichen Zykluszeitanforderungen der verschiedenen Sensoreinheiten angeglichen werden, so dass im Resultat nahezu die gesamte zur Verfügung stehende Prozessorleistung genutzt wird.

Eine beispielhafte Ausführungsform der vorliegenden Erfindung sieht vor, dass der Messsignalaufnehmer, der A/D-Wandler und die Sende- und/oder Empfangseinheit jeweils einen Dateneingang, einen Datenausgang und einen Steuereingang aufweisen. Hierbei ist der Dateneingang des A/D-Wandlers mit dem Datenausgang des Messsignalaufnehmers sowie der Dateneingang der Sende- und/oder Empfangseinheit mit dem Datenausgang des A/D-Wandlers verbunden. Des weiteren tauscht die Sende- und/oder Empfangseinrichtung über ihren Datenausgang Daten mit dem Umgebungsgerät aus. Darüber hinaus nimmt der Prozessor jeweils über die Steuereingänge auf den Messsignalaufnehmer, den A/D-Wandler und die Sende- und Empfangseinrichtung Einfluss.

Hierzu ist im übrigen anzumerken, dass es auch möglich ist, über das Umgebungsgerät beispielsweise Konfigurationsdaten oder dergleichen zu einer Sensoreinheit zu senden. Unter einer "Sende- und/oder Empfangseinrichtung" ist hier also eine reine Sendeeinrichtung als auch eine Sende- und Empfangseinrichtung zu subsumieren.

Gemäß einer weiteren beispielhaften Ausführungsform ist, die Sensoreinheit ein Füllstandssensor, mit welcher der Füllstand von beispielsweise Flüssigkeiten in Behältern erfasst werden kann.

Gemäß einer weiteren beispielhaften Ausführungsform sendet und empfängt der Messsignalaufnehmer des Füllstandssensors ein Radarsignal, ein Ultraschallsignal oder ein beispielsweise an einem Draht geführtes Mikrowellensignal. Die Verwendung eines geführten Mikrowellensignals hat den Vorteil, dass der Behälterfüllstand lokal gemessen werden kann.

Gemäß einer weiteren beispielhaften Ausführungsform ist das Messsignal ein Laufzeitsignal, wobei die Laufzeit zwischen Aussenden eines Referenzsignals und Empfang eines oder mehrerer von der Flüssigkeitsoberfläche reflektierenden Signale ausgewertet wird.

Eine weitere beispielhafte Ausführungsform sieht vor, dass zwischen der Sensoreinheit und dem Umgebungsgerät mit Auswerteeinheit eine bidirektionale Datenübermittlung erfolgt. So ist ein Messsignalfluss von der Sensoreinheit zum Umgebungsgerät wie auch ein Datenfluss vom Umgebungsgerät zur Sensoreinheit, beispielsweise in Form von Steuerbefehlen, denkbar.

Nach einer weiteren besonders bevorzugten Ausführungsform findet die drahtlose Übermittlung der Daten zwischen der Sensoreinheit und dem Umgebungsgerät mit Auswerteeinheit nach dem WLAN-Standard, dem Wireless-Personal-Area-Network-Standards mit mehreren Unterstandards wie beispielsweise Bluetooth, dem HiperLAN 2 Standard, dem DECT, dem GSM Standard oder dem UMTS Standard statt. In diesem Zusammenhang soll beispielhaft auf die Bluetooth-Technologie eingegangen werden. Die Bluethooth-Technik ist eine offene Spezifikation für drahtlose Übertragung von Daten und Sprache. Sie basiert auf einer preisgünstigen kurzwelligen Technologie, die in einen Mikrochip implementiert werden kann und eine gesicherte Ad-hoc-Verbindung zwischen festen und mobilen Endgeräten ermöglicht. Die Bluetooth-Technologie steht auf einer breiten Plattform von Anwendungen und wurde 1998 durch die Firmen Ericsson, Intel, Nokia, IBM und Toshiba als Standard ins Leben gerufen.

Eine weitere beispielhafte Ausführungsform sieht vor, dass zwischen dem Umgebungsgerät mit Auswerteeinheit und dem Prozessleitsystem eine bidirektionale Datenübermittlung erfolgt. So ist beispielsweise denkbar, dass das Umgebungsgerät mit Auswerteeinheit mit einem Prozessleitsystem draht- oder drahtlos verbunden ist. Insbesondere die drahtlose Verbindung des Umgebungsgerätes mit Steuereinheit zum Prozessleitsystem macht eine besonders flexible Gestaltung der gesamten Anordnung möglich.

Eine weitere Ausführungsform der Erfindung beinhaltet, dass zwischen dem Umgebungsgerät mit Auswerteeinheit und dem Prozessleitsystem eine bidirektionale Datenübermittlung erfolgt, dass das Umgebungsgerät mit Auswerteeinheit die erzeugten Messwerte an das Prozessleitsystem überträgt und dass das Umgebungsgerät mit Auswerteeinheit vom Prozessleitsystem Steuerbefehle empfängt.

Nach einer weiteren beispielhaften Ausführungsform ist das Umgebungsgerät mit Auswerteeinheit ein mobiles Gerät. Hier ist beispielsweise denkbar, das Umgebungsgerät mit Auswerteeinheit in einen tragbaren Computer (Laptop) oder einen PDA zu integrieren.

Gemäß einer weiteren beispielhaften Ausführungsform ist die Sensoreinheit mit einem weiteren Umgebungsgerät drahtlos verbunden, wobei das weitere Umgebungsgerät eine Bedien- und Anzeigeeinrichtung umfasst. Durch die drahtlose Ausbildung der Verbindung zwischen Sensoreinheit und dem Umgebungsgerät mit Bedien- und Anzeigeeinrichtung wird die aufwendige und kostenintensive Verkabelung zwischen den beiden Geräten eingespart. Des weiteren kann in Verbindung mit dem Merkmal, dass das Umgebungsgerät mit Bedien- und Anzeigeeinrichtung ein mobiles Gerät, wie beispielsweise ein tragbarer Computer ist, die Einflussnahme durch den Bediener an verschiedenen Orten vorgenommen werden. Das bedeutet, dass sich ein Bediener unabhängig vom Ort der Sensoreinheit bewegen kann und durch das Umgebungsgerät mit Bedien- und Anzeigeeinrichtung Daten und Parameter vom Sensor laden und anzeigen sowie an diesen senden kann.

Nach einer weiteren beispielhaften Ausführungsform sind das Umgebungsgerät mit Bedien- und Anzeigeeinrichtung und das Umgebungsgerät mit Auswerteeinheit drahtlos miteinander verbunden.

Eine weitere beispielhafte Ausführungsform sieht vor, dass zwischen dem Umgebungsgerät mit Bedien- und Anzeigeeinrichtung und dem Umgebungsgerät mit Auswerteeinheit eine bidirektionale Datenübertragung erfolgt. So ist beispielsweise denkbar, dass Parameterdaten, die von einem Umgebungsgerät (beispielsweise mit Bedien- und Anzeigeeinrichtung) an die Sensoreinheit gesendet werden, ebenfalls an das Umgebungsgerät mit Auswerteeinheit übermittelt werden, wobei das Umgebungsgerät mit Auswerteeinheit auf Steuerbefehle vom Prozessleitsystem die Parameterdaten optimiert und anpasst. Die so erhaltenen optimierten Parameterdaten werden anschließend wieder vom Umgebungsgerät mit Auswerteeinheit an das Umgebungsgerät mit Bedien- und Anzeigeeinrichtung übermittelt.

Eine weitere Möglichkeit, die durch die Verbindung zwischen Umgebungsgerät mit Auswerteeinheit und Umgebungsgerät mit Bedien- und Anzeigeeinrichtung steht ist, dass durch das Umgebungsgerät mit Bedien- und Anzeigeeinrichtung auf das Umgebungsgerät mit Auswerteeinheit dergestalt Einfluss genommen werden kann, dass Algorithmen, die bei der Signalverarbeitung verwendet werden verändert, getestet und optimiert werden können.

Eine weitere beispielhafte Ausführungsform der Erfindung sieht vor, dass die Sensoreinheit eine weitere Sende- und Empfangseinrichtung aufweist, welche mit dem Umgebungsgerät mit Bedien- und Anzeigeeinrichtung kommuniziert. Mit diesem Merkmal wird erreicht, dass für die Kommunikation der Sensoreinheit mit dem Umgebungsgerät mit Auswerteeinheit sowie mit dem Umgebungsgerät mit Bedien- und Anzeigeeinrichtung jeweils eine separate Sende- und Empfangseinrichtung zur Verfügung steht.

Analog zur drahtlosen Übermittlung von Daten zwischen der Sensoreinheit und dem Umgebungsgerät mit Auswerteeinheit ist es auch für die drahtlose Übermittlung von Daten zwischen der Sensoreinheit und dem Umgebungsgerät mit Bedien- und Anzeigeeinrichtung bzw. zwischen dem Umgebungsgerät mit Bedien- und Anzeigeeinrichtung und dem Umgebungsgerät mit Auswerteeinheit sinnvoll, wenn diese nach einem der bereits vorher erwähnten Standards erfolgt.

Eine weitere beispielhafte Ausgestaltung der vorliegenden Erfindung sieht vor, dass die Auswerteeinheit und die Bedien- und Anzeigeeinrichtung in einem einzigen Umgebungsgerät integriert sind. Durch die Integration der verschiedenen Komponenten in einem Gerät kann eine Kostenreduktion erreicht werden.

Des weiteren soll ein Datenkommunikationssystem unter Schutz gestellt werden, welches mehrere Sensoreinheiten, wie sie zuvor erläuterte wurden, sowie ein Umgebungsgerät mit Auswerteeinheit umfasst. Durch dieses Datenkommunikationssystem können demzufolge mehrere Sensoreinheiten unabhängig voneinander angesteuert bzw. die von diesen Sensoreinheiten aufgenommenen Messsignale zum Umgebungsgerät mit Auswerteeinheit gesendet werden. Im Umgebungsgerät mit Auswerteeinheit werden die verschiedenen Messsignale der Sensoreinheiten durch die Auswerteeinheit in Signalverarbeitungsprozessen zu Messwerten weiterverarbeitet. Die so erzeugten Messwerte werden dann beispielsweise einem Prozessleitsystem übermittelt, welches auf der Basis dieser Messwerte den gesamten Ablauf des Fertigungsprozesses der Produktionsanlage steuert.

Eine weitere Ausführungsform sieht vor, dass das Datenkommunikationssystem des weiteren ein Umgebungsgerät mit Bedien- und Anzeigeeinrichtung umfasst. Somit kann mittels des Umgebungsgeräts mit Bedien- und Anzeigeeinrichtung auf die verschiedenen Sensoreinheiten unabhängig voneinander Einfluss genommen werden, ohne dass diese drahtgebunden mit der Bedien- und Anzeigeeinrichtung verbunden sind.

Gemäß einem weiteren Aspekt der Erfindung betrifft die Erfindung auch ein Umgebungsgerät, das eine Empfangs- und/oder Sendeeinrichtung umfasst, die zum drahtlosen Kommunizieren mit zumindest einer Sensoreinrichtung der zuvor beschriebenen Art ausgebildet ist. Das Umgebungsgerät umfasst ferner einer Auswerteeinheit, in der die von einem Sensor drahtlos empfangenen Messsignale ausgewertet werden und schlussendlich einen Wert generiert, der einen vom Sensor zu messenden Messwert repräsentiert und der dann beispielsweise zu einer Anzeigeeinheit oder auch einer Kontrollwarte weitergeleitet wird. Dort wird dieser berechnete Messwert dann zur Prozesssteuerung benutzt oder angezeigt (wie beispielsweise Füllstandshöhe, Temperatur, Druck, Durchflussvolumen etc.) Alternativ zu dieser beispielhaften Ausführungsform der Erfindung ist das Umgebungsgerät nicht mit der Auswerteeinheit ausgestattet, aber mit einer externen Auswerteeinheit verbindbar oder koppelbar.

### KURZE BESCHREIBUNG DER ZEICHNUNGEN

Nachfolgend wird zum besseren Verständnis und Erläuterung eine beispielhafte Ausführungsform der vorliegenden Erfindung unter Bezugnahme auf die beigefügten Zeichnungen näher beschrieben. Es zeigt:
- Fig. 1: ein Blockschaltbild der erfindungsgemäßen Sensoreinheit mit Umgebungsgerät mit Auswerteeinheit und Umgebungsgerät mit Bedien- und Anzeigeeinrichtung,
- Fig. 2: ein Blockschaltbild eines erfindungsgemäßen Datenkommunikationssystems,
- Fig. 3: ein schematisches Flussdiagramm von Interoperability Requirements für Bluetooth als WAP-Übertragungssystem sowohl für einen erfindungsgemäßen Sensor als auch für eine Bedieneinheit,
- Fig. 4: ein schematisches Flussdiagramm zur Off- und Onlinebedienung eines erfindungsgemäßen Sensors, und
- Fig. 5: ein schematisches Blockschaltbild mehrerer Sensoren A, B und C mit einem oder mehreren Umgebungsgeräten gemäß der Erfindung.

### BESCHREIBUNG EINER BEISPIELHAFTEN AUSFÜHRUNGSFORM DER VORLIEGENDEN ERFINDUNG

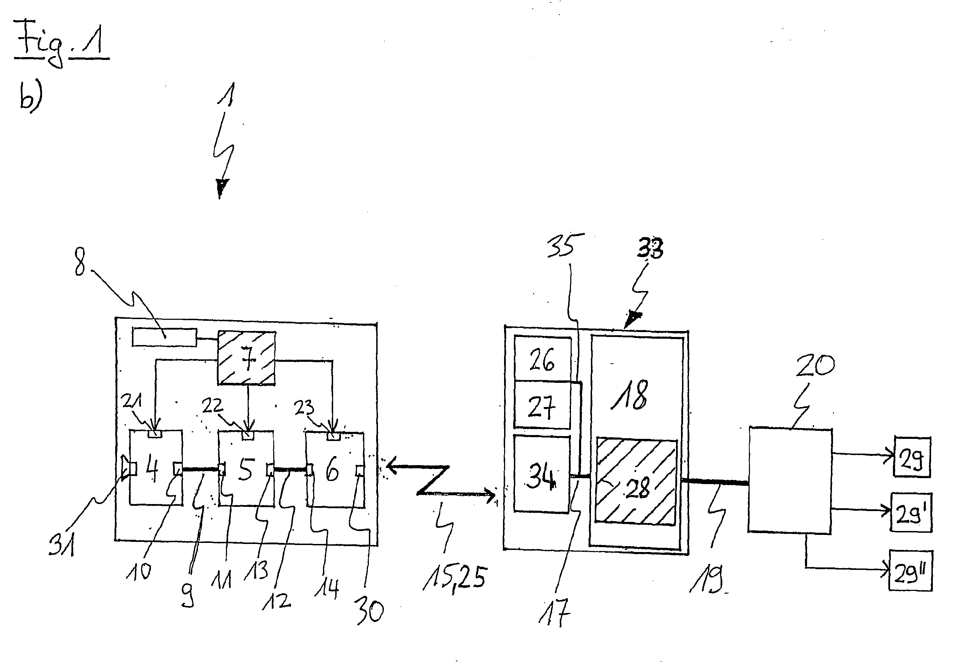

Die Fig. 1 a zeigt eine erfindungsgemäße Sensoreinheit 1, die jeweils drahtlos mit einem Umgebungsgerät 2 mit Auswerteeinheit 18 und einem Umgebungsgerät 3 mit Bedien- und Anzeigeeinrichtung 26, 27 verbunden ist. Die Sensoreinheit 1 umfasst einen Messsignalaufnehmer 4 zur Erfassung eines Messsignals 9, einen A/D-Wandler 5 zur Digitalisierung des Messsignals 9 sowie eine Sende- und Empfangseinrichtung 6 zur drahtlosen Datenübermittlung zwischen der Sensoreinheit 1 und den Umgebungsgeräten 2 und 3. Des weiteren weist die Sensoreinheit 1 einen Steuerungsprozessor 7 zur Steuerung des Messsignalaufnehmers 4, des A/D- Wandlers 5 und der Sende- und Empfangseinrichtung 6 auf. Für den Messablauf notwendige Parameter- und Kalibrierdaten sind in einem Speicher 8 abgelegt. Der Steuerungsprozessor 7 nimmt auf den Speicher 8 direkten Einfluss und ruft vom Speicher 8 Parameter- und Kalibrierdaten ab bzw. schreibt diese in den Speicher 8.

Im vorliegenden Ausführungsbeispiel handelt es sich bei der Sensoreinheit 1 um einen Füllstandssensor. Der Messsignalaufnehmer 4 des Füllstandssensors 1 sendet und empfängt hierbei über einen Dateneingang 31 ein Radarsignal, ein Ultraschallsignal oder ein geführtes Mikrowellensignal, welches allgemein als Messsignal 9 bezeichnet werden soll. Das Messsignal 9 kann hierbei im Messsignalaufnehmer 4 beispielsweise von einem Ultraschallsignal in ein elektrisches Signal gewandelt werden. Anschließend wird das Messsignal 9 von einem Datenausgang 10 des Messsignalaufnehmers 4 ausgegeben und von einem Dateneingang 11 des A/D-Wandlers 5 aufgenommen und im A/D-Wandler 5 digitalisiert. Danach wird das digitalisierte Messsignal 12 von einem Datenausgang 13 des A/D-Wandlers 5 ausgegeben und von einem Dateneingang 14 der Sende- und Empfangseinrichtung 6 aufgenommen. Die Sende- und Empfangseinrichtung 6 wandelt das digitalisierte Messsignal 12 in ein Funksignal 15 um und gibt es über einen Datenausgang 30 aus. Das Funksignal 15 wird von einer Sende- und Empfangseinrichtung 16 des Umgebungsgeräts 2 mit Auswerteeinheit 18 empfangen. Die Sende- und Empfangseinrichtung 16 wandelt das Funksignale 15 wiederum in ein digitalisiertes Messsignal 17 um, welches anschließend in einer Auswerteeinheit 18 zu einem Messwert 19 weiter verarbeitet wird. Der Messwert 19 wird von der Auswerteeinheit 18 über eventuell weitere Stationen, auf die in diesem Zusammenhang nicht eingegangen werden soll, an ein Prozessleitsystem 20 ausgegeben.

Das Prozessleitsystem 20 wiederum bekommt Messwerte 19 von verschiedensten Sensoreinheiten über das Umgebungsgerät 2 mit Auswerteeinheit 18 (In Fig. 1 a ist nur der Messwert 19 der Sensoreinheit 1 dargestellt). Die verschiedenen Messwerte werden im Prozessleitsystem 20 weiter verarbeitet, d. h. das Prozessleitsystem 20 regelt aufgrund der verschiedenen Messwerte 19 die Ansteuerung von Aktoren 29, 29', 29" zur Prözessbeeinflussung und Steuerung einer Fertigungsanlage.

Die Steuerung des Messablaufs durch den Messwertaufnehmer 4 sowie die Wandlung des analogen Signals durch den Analog-Digital-Wandler 5 als auch die Ansteuerung der Sende- und Empfangseinrichtung 6 wird durch den Steuerungsprozessor 7 übernommen. Hierzu ist der Steuerungsprozessor 7 mit den Steuerungseingängen 21, 22 und 23 des Messsignalaufnehmers 4, des A/D-Wandlers 5 und der Sende- und Empfangseinrichtung 6 verbunden. Da der Steuerungsprozessor 7 lediglich die Ansteuerung des Messsignalaufnehmers 4, des A/D-Wandlers 5 und der Sende- und Empfangseinrichtung 6, nicht aber die Auswertung des Messsignals 9 bzw. 12 übernimmt, werden an die Leistungsfähigkeit des Steuerungsprozessors 7 keine hohen Anforderungen im Vergleich zu einem Signalauswertungsprozessor 28 gestellt. Dies hat zur Folge, dass der Steuerungsprozessor 7 kostengünstig in seiner Beschaffung als auch in seinem Betrieb ist.

Um Kalibrierdaten, Parameterdaten zur Steuerung des Messablaufs sowie Betriebsstatusdaten zwischen der Sensoreinheit 1 und dem Umgebungsgerät 3 mit Bedien- und Anzeigeeinrichtung 26, 27 auszutauschen, weist das Umgebungsgerät 3 mit Bedien- und Anzeigeeinrichtung 26, 27 eine Sende- und Empfangseinrichtung 24 auf. Die Sende- und Empfangseinrichtung 24 kommuniziert mit der Sende- und Empfangseinrichtung 6 der Sensoreinheit 1 drahtlos, beispielsweise durch den Bluetooth-Standard. Auf diese Art und Weise werden Status und Parameterdaten 25 zwischen der Sensoreinheit 1 und dem Umgebungsgerät 3 mit Bedien- und Anzeigeeinrichtung 26, 27 übertragen.

Um die Signalverarbeitung zu optimieren, d.h. Parameter der Signalverarbeitungsalgorythmen entsprechend den Ereignissen aus der Signalverarbeitung zu verbessern, testen und zu optimieren, findet zwischen dem Umgebungsgerät 3 mit Bedien- und Anzeigeeinringung 26,27 und dem Umgebungsgerät 2 mit Auswerteeinheit 18 ein drahtloser bidirektionaler Austausch von Kontrolldaten 32 statt. Dadurch wird gewährleistet, dass während des Signalverarbeitungsprozesses auf die Signalverarbeitung mittels des Umgebungsgerätes 3 mit Bedien- und Anzeigeeinrichtung 26,27 Einfluss genommen werden kann. Der Austausch der Kontrolldaten 32 wird über die Sende- und Empfangseinrichtung 24 des Umgebungsgerätes 3 mit Bedien- und Anzeigeeinrichtung 26,27 sowie durch die Sende- und Empfangseinrichtung 16 des Umgebungsgerätes 2 mit Auswerteeinheit 18 vermittelt.

Die Fig. 1 b weist im wesentlichen die selben Merkmale wie die Fig. 1 a auf, mit dem Unterschied, dass eine Ausführungsform dargestellt ist, bei der sowohl die Auswerteeinheit 18 als auch die Bedien- und Anzeigeeinrichtung 26, 27 in einem einzigen Umgebungsgerät 33 integriert sind. Das Umgebungsgerät 33 weist des weiteren eine Sende- und Empfangseinrichtung 34 auf, die mit der Sende- und Empfangseinrichtung 6 der Sensoreinheit 1 nicht ausgewertete Messsignale 15 sowie Status- und Parameterdaten 25 in Form von Funksignalen austauscht. Des Weiteren werden zwischen der Bedien- und Anzeigeeinrichtung 26, 27 und der Auswerteeinheit 18 drahtgebundene Kontrolldaten 35 ausgetauscht.

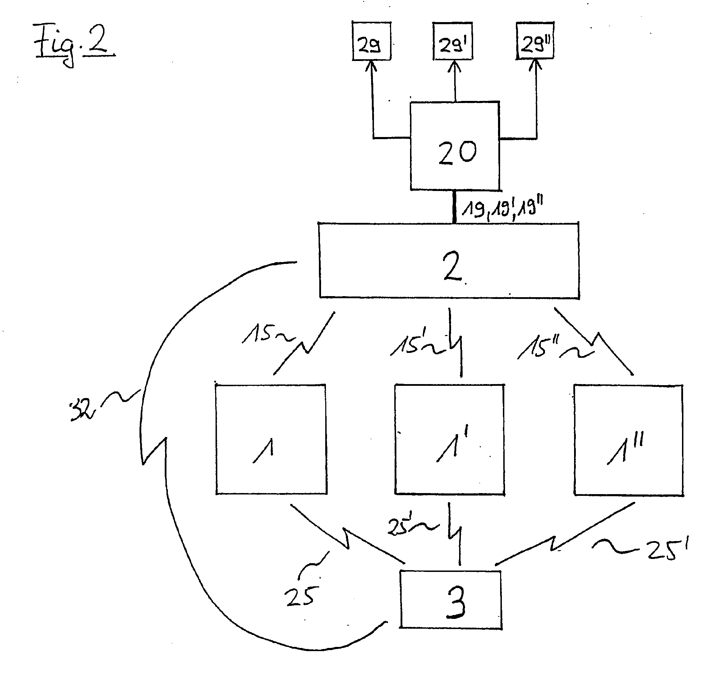

Die Fig. 2 zeigt ein Datenkommunikationssystem, bestehend aus drei Sensoreinheiten 1, 1' und 1", die jeweils drahtlos mit einem Umgebungsgerät 2 mit Auswerteeinheit 18 sowie einem Umgebungsgerät 3 mit Bedien- und Anzeigeeinrichtung verbunden sind. Die drahtlose Datenübermittlung erfolgt im vorliegenden Ausführungsbeispiel mit beiden Umgebungsgeräten 2, 3 jeweils nach dem sog. Bluetooth-Standard. Jede Sensoreinheit 1, 1' und 1" sendet Funksignale 15, 15' und 15" aus. Die Funksignale 15, 15' und 15" beinhalten hierbei nicht ausgewertete Messsignale der Sensoreinheiten 1, 1', 1", da eine Auswertung und Signalverarbeitung im Umgebungsgerät 2 mit Auswerteeinheit 18 stattfindet. Das Umgebungsgerät 2 mit Auswerteeinrichtung sendet die in ihrer Auswerteeinrichtung 18 erzeugten Messwerte 19, 19', 19" zum Prozessleitsystem 20, welches darauf basierend Steuerbefehle an Aktoren 29, 29', 29" (und Sensoren) aussendet.

Die Parametrisierung sowie die Statusabfrage der Sensoreinheiten 1, 1' und 1" erfolgt durch Status- und Parameterdaten 25, 25' und 25", die zwischen den Sensoreinheiten 1, 1' und 1" und dem Umgebungsgerät 3 mit Bedien- und Anzeigeeinrichtung 26, 27 ausgetauscht werden.

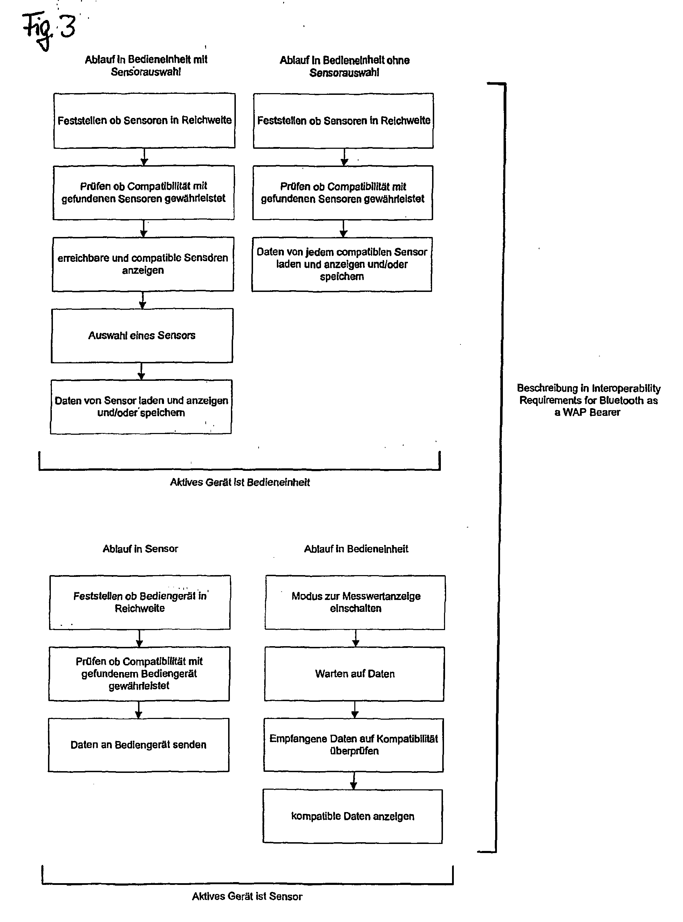

Die Fig. 3 zeigt schematisch und vereinfacht den grundsätzlichen Ablauf in einer Bedieneinheit mit und ohne Sensorauswahl, wenn das aktive Gerät die Bedieneinheit ist. Ferner ist hierin auch ein Fall dargestellt, bei dem als aktives Gerät ein erfindungsgemäßer Sensor zum Einsatz kommt. Der hierin beschriebene Ablauf betrifft die Interoperability Requirements, wenn Bluetooth als WAP-Übertragungsmittel zwischen einem erfindungsgemäßen Sensor und einem erfindungsgemäßen Übertragungsgerät verwendet wird.

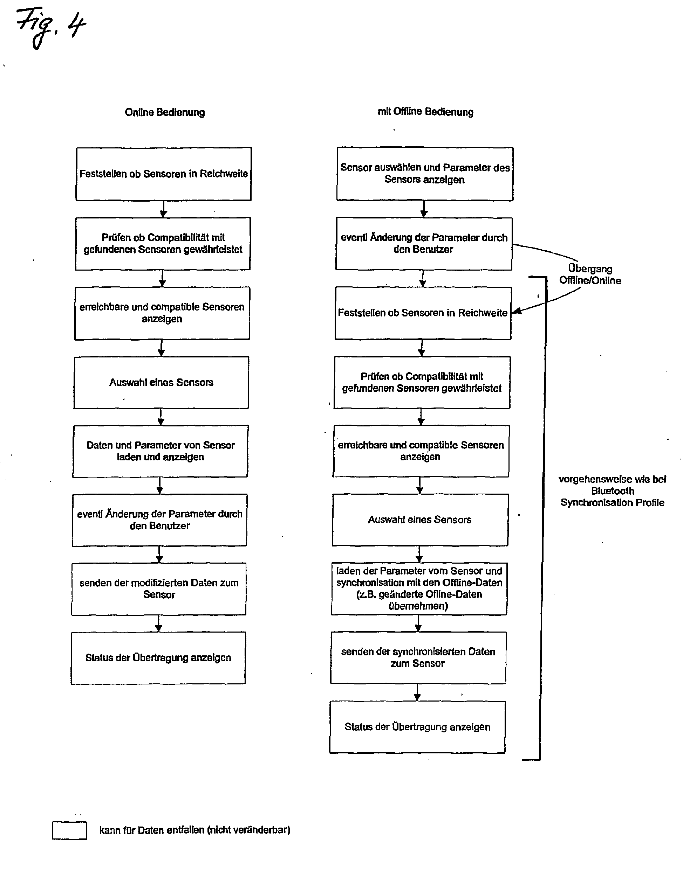

Die Fig. 4 veranschaulicht die Synchronisationsprofile zur Kommunikation zwischen einem erfindungsgemäßen Sensor und einem erfindungsgemäßen Umgebungsgerät, wenn Bluetooth zum Einsatz kommt. In der Fig. 4 wird zwischen einer OnlineBedienung und einer Offline-Bedienung unterschieden. Für nähere Einzelheiten wird unmittelbar auf die Fig. 4 und die hierin gezeigten Flussdiagramme verwiesen.

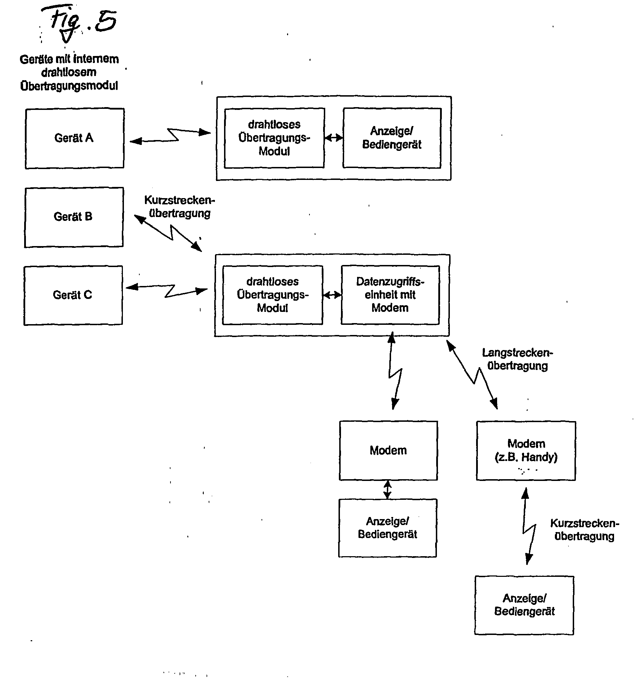

Schließlich zeigt die Fig. 5 in schematischer Weise ein Blockschaltbild der Kommunikation zwischen verschiedenen Sensoren A, B und C und erfindungsgemäßen Umgebungsgeräten. So ist hieraus ersichtlich, dass beispielsweise ein Sensor A mit einem Umgebungsgerät kommuniziert und in diesem Umgebungsgerät eine Anzeige nach der Auswertung des übertragenen Messsignals erfolgt. Umgekehrt kann auch eine Bedienung des Sensors A über das in dem Umgebungsgerät vorhandene Bediengerät erfolgen.

In einer alternativen Ausführungsform erfolgt mit den Sensoren B oder C eine Kurzstreckenübertragung von Messsignalen, beispielsweise über Bluetooth, zu einem Umgebungsgerät. Dieses Umgebungsgerät überträgt dann wieder per Modem über eine Langstrecke die Daten an ein weiteres Modem, das mit einer Anzeige verbunden ist. Es ist möglich, die Auswertung in dem Umgebungsgerät vorzunehmen, oder die Auswertung erst nach der Langstreckenübertragung der Messsignale in einer Auswerteeinheit vorzunehmen. Dann erst erfolgt entsprechende Anzeige bzw. Übermittlung eines Messwertes an eine Prozesssteuerung.

### Bezugszeichenliste

- 1: Sensoreinheit
- 2: Umgebungsgerät mit Auswerteeinheit
- 3: Umgebungsgerät mit Bedien- und Anzeigeeinrichtung
- 4: Messsignalaufnehmer
- 5: A/D-Wandler
- 6: Sende- und Empfangseinrichtung
- 7: Steuerungsprozessor
- 8: Speicher
- 9: Analoges Messsignal
- 10: Datenausgang (Messsignalaufnehmer)
- 11: Dateneingang (A/D-Wandler)
- 12: Digitalisiertes Messsignal
- 13: Datenausgang (A/D-Wandler)
- 14: Dateneingang (Sende- und Empfangseinrichtung)
- 15: Funksignal (beispielsweise nicht ausgewertete Messsignale)
- 16: Sende- und Empfangseinrichtung (Umgebungsgerät mit Auswerteeinheit)
- 17: Digitalisiertes Messsignal
- 18: Auswerteeinheit
- 19: Messwert
- 20: Prozessleitsystem
- 21: Steuereingang (Messsignalaufnehmer)
- 22: Steuereingang (A/D-Wandler)
- 23: Steuereingang (Sende- und Empfangseinrichtung)
- 24: Sende- und Empfangseinrichtung (Umgebungsgerät mit Bedien- und Anzeigeeinrichtung)
- 25: Funksignal (Status- und Parameterdaten
- 26: Bedieneinrichtung
- 27: Anzeigeeinrichtung
- 28: Auswerteprozessor
- 29: Aktoren
- 30: Datenausgang (Sende- und Empfangseinrichtung
- 31: Dateneingang (Messsignalaufnehmer)
- 32: Funksignal (Kontrolldaten)
- 33: Umgebungsgerät mit Auswerteeinheit; Bedien- und Anzeigeneinricht
- 34: Sende- und Empfangseinrichtung (Umgebungsgerät mit Auswerteeinheit, Bedien- und Anzeigeeinrichtung)
- 35: Drahtgebundenes Signal (Kontrolldaten)

## Patentansprüche

1. Sensoreinheit (1) mit einem Messsignalaufnehmer (4) der ein Messsignal (9) erfasst, einem A/D-Wandler (5) zum digitalisieren des Messsignals (9), einer Sende- und Empfangseinrichtung (6) zur drahtlosen Datenübermittlung an ein Umgebungsgerät (2) und einen Prozessor (7), der den Messsignalaufnehmer (4), den A/D-Wandler (5) und die Sende- und/oder Empfangseinrichtung (6) derart ansteuert, dass das erfasste Messsignal (9) digitalisiert und anschließend ohne Signalverarbeitung nach der A/D-Wandlung über die Sende- und/oder Empfangseinrichtung (6) zum Umgebungsgerät (2) übertragen wird, welches mit einer Auswerteeinheit (18) verbunden ist, die das Messsignal (9, 12, 17) zu einem Messwert (19) weiterverarbeitet;
wobei der Prozessor (7) mit einem Speicher (8) gekoppelt ist, in dem Parameter- und Kalibrierdaten für einen Messablauf abgelegt werden können.

2. Sensoreinheit nach Anspruch 1,
**wobei** der Messsignalaufnehmer (4), der A/D-Wandler (5) und die Sende- und Empfangseinrichtung (6) jeweils einen Dateneingang (31, 11, 14), einen Datenausgang (10, 13, 30) und einen Steuereingang (21, 22, 23) aufweisen, wobei der Dateneingang (11) des AlD-Wandlers (5) mit dem Datenausgang (10) des Messsignalaufnehmers (4) und der Dateneingang (14) der Sende- und Empfangseinrichtung (6) mit dem Datenausgang (13) des A/D-Wandlers (5) verbunden sind, wobei die Send- und Empfangseinrichtung (6) über ihren Datenausgang (30) Daten (15) mit dem Umgebungsgerät (2) austauscht, und wobei der Prozessor (7) jeweils über die Steuereingänge (21, 22, 23) auf den Messsignalaufnehmer (4), den A/D-Wandler (5) und die Sende- und Empfangseinrichtung (6) Einfluss nimmt.

3. Sensoreinheit nach Anspruch 1 oder 2,
**wobei** die Sensoreinheit ein Füllstandssensor (1) ist.

4. Sensoreinheit nach Anspruch 3,
**wobei** der Messsignalaufnehmer (4) des Füllstandssensors (1) ein Radarsignal, ein Ultraschallsignal oder ein geführtes Mikrowellensignal aussendet und empfängt.

5. Sensoreinheit nach einem der Ansprüche 1 bis 4,
**wobei** das Messsignal (9) ein Laufzeitsignal ist.

6. Sensoreinheit nach einem der Ansprüche 1 bis 5,
**wobei** die drahtlose Übermittlung der Daten (15) zwischen der Sensoreinheit (1) und dem Umgebungsgerät (2) mit Auswerteeinheit (18) nach dem WLAN (IEEE 802.11) wie bspw. 54 Mbps WLAN (IEEE 802.11 g) Standard, den Wireless Personal Area Network Standards (IEEE 802.15) mit mehreren Unterstandards wie bspw. Bluetooth, dem HiperLAN 2 Standard, dem DECT, dem GSM oder dem UMTS Standard erfolgt.

7. Sensoreinheit nach einem der Ansprüche 1 bis 5,
**wobei** zwischen der Sensoreinheit (1) und dem Umgebungsgerät (2) mit Auswerteeinheit (18) eine bidirektionale Datenübermittlung erfolgt.

8. Sensoreinheit nach einem der Ansprüche 1 bis 7,
**wobei** das Umgebungsgerät (2) mit Auswerteeinheit (18) mit einem Prozessleitsystem (20) verbunden ist.

9. Sensoreinheit nach Anspruch 8,
**wobei** das Umgebungsgerät (2) mit Auswerteeinheit (18) mit dem Prozessleitsystem (20) drahtlos verbunden ist.

10. Sensoreinheit nach Anspruch 8 oder 9,
**wobei** zwischen dem Umgebungsgerät (2) mit Auswerteeinheit (18) und dem Prozessleitsystem (20) eine bidirektionale Datenübermittlung erfolgt.

11. Sensoreinheit nach den Ansprüchen 8 bis 10
**wobei** das Umgebungsgerät (2) mit Auswerteeinheit (18) ein mobiles Gerät ist.

12. Sensoreinheit nach einem der Ansprüche 1 bis 11
**wobei** die Sensoreinheit (1) mit einem weiteren Umgebungsgerät (3) drahtlos verbunden ist, wobei das weitere Umgebungsgerät (3) eine Bedien- und Anzeigeeinrichtung (26, 27) umfasst.

13. Sensoreinheit nach Anspruch 12,
**wobei** das Umgebungsgerät (3) mit Bedien- und Anzeigeeinrichtung (26, 27) ein mobiles Gerät ist.

14. Sensoreinheit nach Anspruch 12 oder 13,
**wobei** das Umgebungsgerät (2) mit Auswerteeinheit (18) drahtlos mit dem Umgebungsgerät (3) mit Bedien- und Anzeigeeinrichtung (26, 27) verbunden ist.

15. Sensoreinheit nach einem der Ansprüche 12 bis 14,
**wobei** zwischen dem Umgebungsgerät (3) mit Bedien- und Anzeigeeinrichtung (26, 27) und dem Umgebungsgerät (2) mit Auswerteeinheit (18) eine bidirektionale Datenübermittlung erfolgt.

16. Sensoreinheit nach einem der Ansprüche 12 bis 15,
**wobei** die Sensoreinheit (1) eine weitere Sende- und Empfangseinrichtung aufweist, die mit dem Umgebungsgerät (3) mit Bedien- und Anzeigeeinrichtung (26, 27) kommuniziert.

17. Sensoreinheit nach den Ansprüchen 12 bis 16,
**wobei** die drahtlose Übermittlung der Daten zwischen der Sensoreinheit (1) und dem Umgebungsgerät (3) mit Bedien- und Anzeigeeinrichtung (26, 27) und / oder zwischen dem Umgebungsgerät (2) mit Auswerteeinheit (18) und dem Umgebungsgerät (3) mit Bedien- und Anzeigeeinrichtung (26, 27) nach dem WLAN (IEEE 802.11) wie bspw. 54 Mbps WLAN (IEEE 802.11 g) Standard, den Wireless Personal Area Network Standards (IEEE 802.15) mit mehreren Unterstandards wie bspw. Bluetooth, dem HiperLAN 2 Standard, dem DECT, dem GSM oder dem UMTS Standard erfolgt.

18. Sensoreinheit nach den Ansprüchen 12 bis 17,
**wobei** die Sensoreinheit (1) mit dem Umgebungsgerät (3) mit Bedien- und Anzeigeeinrichtung (26, 27) Parameter- und Statusdaten (25) austauscht.

19. Sensoreinheit nach einem der Ansprüche 1 bis 18,
**wobei** die Auswerteeinheit (18) und die Bedien- und Anzeigeeinrichtung (26, 27) in einem Umgebungsgerät (33) integriert sind.

20. Sensoreinheit nach einem der Ansprüche 1 bis 19,
**wobei** an der Sensoreinheit (1) eine Schnittstelle zur drahtgebundenen Übermittlung von Daten vorgesehen ist.

21. Datenkommunikationssystem, umfassend mehrere Sensoreinheiten (1) nach einem der Ansprüche 1 bis 20 und ein hiermit drahtlos kommunizierendes Umgebungsgerät (2), das mit einer Auswerteeinheit (18) gekoppelt ist.

22. Datenkommunikationssystem nach Anspruch 21,
**wobei** das Datenkommunikationssystem das Umgebungsgerät (3) mit Bedien- und Anzeigeeinrichtung (26, 27) umfasst.

23. Umgebungsgerät (2), umfassend eine Empfangs- und/oder Sendeeinrichtung, die zum drahtlosen Kommunizieren mit zumindest einer Sensoreinrichtung (1) nach einem der Ansprüche 1-20 ausgebildet ist, wobei in das Umgebungsgerät (2) eine Auswerteeinheit (18) integriert ist oder das Umgebungsgerät (2) mit einer externen Auswerteeinheit (18) verbindbar ist, und die Auswerteeinheit (18) ein von einer Sensoreinrichtung (1) empfangenes digitales Messsignal (9, 12, 17) zu einem Messwert (19) weiterverarbeitet.

## Claims

1. A sensor unit (1) with a measured signal receiver (4) that registers a measured signal (9), an A/D converter (5) for digitizing the measured signal (9), a transmitting and receiving device (6) for wirelessly transmitting data to an environmental device (2) and a processor (7) that activates the measured signal sensor (4), the A/D converter (5) and the transmitting and/or receiving device (6) in such a way that the registered measured signal (9) is digitized and then transmitted to the environmental device (2) via the transmitting and/or receiving device (6) without signal processing after the A/D conversion, with the environmental device being connected to an analysis unit (18) that processes the measured signal (9, 12, 17) into a measured value (19),
wherein the processor (7) is coupled to a memory (8), in which parameter and calibration data for a measuring cycle can be stored.

2. The sensor unit of claim 1,
**wherein** the measured signal receiver (4), the A/D converter (5) and the transmitting and receiving device (6) respectively feature a data input (31, 11, 14), a data output (10, 13, 30) and a control input (21, 22, 23), with the data input (11) of the A/D converter (5) being connected to the data output (10) of the measured signal sensor (4) and the data input (14) of the transmitting and receiving device (6) being connected to the data output (13) of the A/D converter (5), with the transmitting and receiving device (6) exchanging data (15) with the environmental device (2) via its data output (30), and with the processor (7) respectively influencing the measured signal receiver (4), the A/D converter (5) and the transmitting and receiving device (6) via the control inputs (21, 22, 23).

3. The sensor unit of claim 1 or 2,
**wherein** the sensor unit is a filling level sensor (1).

4. The sensor unit of claim 3,
**wherein** the measured signal receiver (4) of the filling level sensor (1) transmits and receives a radar signal, an ultrasonic signal or a guided microwave signal.

5. The sensor unit of one of claims 1 to 4,
**wherein** the measured signal (9) is a transit time signal.

6. The sensor unit of one of claims 1 to 5,
**wherein** the wireless transmission of data (15) between the sensor unit (1) and the environmental device (2) with the analysis unit (18) takes place in accordance with the WLAN (IEEE 802.11) standard such as, e.g., 54 Mbps WLAN (IEEE 802.11g) standard, the Wireless Personal Area Network Standards (IEEE 802.15) with several substandards such as, e.g., Bluetooth, the HiperLAN 2, the DECT, the GSM or the UMTS standard.

7. The sensor unit of one of claims 1 to 5,
**wherein** a bidirectional data transmission takes place between the sensor unit (1) and the environmental device (2) with the analysis unit (18).

8. The sensor unit of one of claims 1 to 7,
**wherein** the environmental device (2) with the analysis unit (18) is connected to a process control system (20).

9. The sensor unit of claim 8,
**wherein** the environmental device (2) with the analysis unit (18) is wirelessly connected to the process control system (20).

10. The sensor unit of claim 8 or 9,
**wherein** a bidirectional data transmission takes place between the environmental device (2) with the analysis unit (18) and the process control system (20).

11. The sensor unit of claims 8 to 10,
**wherein** the environmental device (2) with the analysis unit (18) is a mobile device.

12. The sensor unit of one of claims 1 to 11,
**wherein** the sensor unit (1) is wirelessly connected to an additional environmental device (3), with the additional environmental device (3) comprising a control and display unit (26, 27).

13. The sensor unit of claim 12,
**wherein** the environmental device (3) with the control and display unit (26, 27) is a mobile device.

14. The sensor unit of claim 12 or 13,
**wherein** the environmental device (2) with the analysis unit (18) is wirelessly connected to the environmental device (3) with the control and display unit (26, 27).

15. The sensor unit of one of claims 12 to 14,
**wherein** a bidirectional data transmission takes place between the environmental device (3) with the control and display unit (26, 27) and the environmental device (2) with the analysis unit (18).

16. The sensor unit of one of claims 12 to 15,
**wherein** the sensor unit (1) features an additional transmitting and receiving device that communicates with the environmental device (3) with the control and display unit (26, 27).

17. The sensor unit of claims 12 to 16,
**wherein** the wireless transmission of data between the sensor unit (1) and the environmental device (3) with the control and display unit (26, 27) and/or between the environmental device (2) with the analysis unit (18) and the environmental device (3) with the control and display unit (26, 27) takes place in accordance with the WLAN (IEEE 802.11) standard such as, e.g., 54 Mbps WLAN (IEEE 802.11g) standard, the Wireless Personal Area Network Standards (IEEE 802.15) with several substandards such as, e.g., Bluetooth, the HiperLAN 2 standard, the DECT, the GSM or the UMTS standard.

18. The sensor unit of claims 12 to 17,
**wherein** the sensor unit (1) exchanges parameter and status data (25) with the environmental device (3) with the control and display unit (26, 27).

19. The sensor unit of one of claims 1 to 18,
**wherein** the analysis unit (18) and the control and display unit (26, 27) are integrated into one environmental device (33).

20. The sensor unit of one of claims 1 to 19,
**wherein** an interface for the wire-bound transmission of data is provided at the sensor unit (1).

21. A data communication system comprising several sensor units (1) of one of claims 1 to 20 and an environmental device (2) that wirelessly communicates with the sensor units and is coupled to an analysis unit (18).

22. The data communication system of claim 21,
**wherein** the data communication system comprises the environmental device (3) with the control and display unit (26, 27).

23. An environmental device (2) comprising a receiving and/or transmitting device designed for wirelessly communicating with at least one sensor unit (1) of one of claims 1-20, wherein an analysis unit (18) is integrated into the environmental device (2) or the environmental device (2) can be connected to an external analysis unit (18) and the analysis unit (18) additionally processes a digital measured signal (9, 12, 17) received from a sensor unit (1) into a measured value (19).

## Revendications

1. Unité de détection (1), comprenant un capteur de signal de mesure (4) qui détecte un signal de mesure (9), un convertisseur A/D (5) pour numériser le signal de mesure (9), un dispositif d'émission et de réception (6) pour la transmission de données sans fil à un périphérique (2), et un processeur (7), qui contrôle le capteur de signal de mesure (4), le convertisseur A/D (5) et le dispositif d'émission et/ou de réception (6) de telle sorte que le signal de mesure (9) détecté est numérisé, puis transmis sans traitement, après la conversion A/D et à travers le dispositif d'émission et/ou de réception (6), au périphérique (2), lequel est relié à une unité d'évaluation (18) qui traite le signal de mesure (9, 12, 17) en une valeur de mesure (19) ; le processeur (7) étant couplé à une mémoire (8), dans laquelle peuvent êtres stockées des données de paramétrage et d'étalonnage pour un déroulement de mesure.

2. Unité de détection suivant la revendication 1, dans laquelle le capteur de signal de mesure (4), le convertisseur A/D (5) et le dispositif d'émission et de réception (6) présentent chacun une entrée de données (31, 11, 14), une sortie de données (10, 13, 30) et une entrée de contrôle (21, 22, 23), l'entrée de données (11) du convertisseur A/D (5) étant reliée à la sortie de données (10) du capteur de signal de mesure (4) et l'entrée de données (14) du dispositif d'émission et de réception (6) étant reliée à la sortie de données (13) du convertisseur A/D (5), le dispositif d'émission et de réception (6) échangeant à travers sa sortie de données (30) des données (15) avec le périphérique (2), et le processeur (7) influant, à travers chacune des entrées de contrôle (21, 22, 23), sur le capteur de signal de mesure (4), le convertisseur A/D (5) et le dispositif d'émission et de réception (6).

3. Unité de détection suivant l'une des revendications 1 et 2, dans laquelle l'unité de détection est un détecteur de niveau de remplissage (1).

4. Unité de détection suivant la revendication 3, dans laquelle le capteur de signal de mesure (4) du détecteur de niveau de remplissage (1) émet et reçoit un signal radar, un signal ultrasonore ou un signal à hyperfréquence câblé.

5. Unité de détection suivant l'une des revendications 1 à 4, dans laquelle le signal de mesure (9) est un signal de temps de parcours.

6. Unité de détection suivant l'une des revendications 1 à 5, dans laquelle la transmission sans fil des données (15) entre l'unité de détection (1) et le périphérique (2) avec unité d'évaluation (18) s'effectue suivant le standard WLAN (IEEE 802.11), tel que par exemple le standard 54 Mbps WLAN (IEEE 802.11g), les standard Wireless Personal Area Network (IEEE 802.15) avec plusieurs sous-standard, tels que par exemple Bluetooth, le standard HiperLAN 2, le standard DECT, GSM ou UMTS.

7. Unité de détection suivant l'une des revendications 1 à 5, dans laquelle une transmission de données bidirectionnelle s'effectue entre l'unité de détection
(1) et le périphérique (2) avec unité d'évaluation (18).

8. Unité de détection suivant l'une des revendications 1 à 7, dans laquelle le périphérique (2) avec unité d'évaluation (18) est relié à un système de contrôle de processus (20).

9. Unité de détection suivant la revendication 8, dans laquelle le périphérique (2) avec unité d'évaluation (18) est relié sans fil au système de contrôle de processus (20).

10. Unité de détection suivant l'une des revendications 8 et 9, dans laquelle une transmission de données bidirectionnelle s'effectue entre le périphérique (2) avec unité d'évaluation (18) et le système de contrôle de processus (20).

11. Unité de détection suivant les revendications 8 à 10, dans lequel le périphérique (2) avec unité d'évaluation (18) est un appareil mobile.

12. Unité de détection suivant l'une des revendications 1 à 11, dans laquelle l'unité de détection (1) est reliée sans fil à un périphérique supplémentaire (3), le périphérique supplémentaire (3) comprenant un dispositif d'affichage et de commande (26, 27).

13. Unité de détection suivant la revendication 12, dans laquelle le périphérique (3) avec dispositif d'affichage et de commande (26, 27) est un appareil mobile.

14. Unité de détection suivant l'une des revendications 12 et 13, dans laquelle le périphérique (2) avec unité d'évaluation (18) est relié sans fil au périphérique (3) avec dispositif d'affichage et de commande (26, 27).

15. Unité de détection suivant l'une des revendications 12 à 14, dans laquelle une transmission de données bidirectionnelle s'effectue entre le périphérique (3) avec dispositif d'affichage et de commande (26, 27) et le périphérique (2) avec unité d'évaluation (18).

16. Unité de détection suivant l'une des revendications 12 à 15, dans laquelle l'unité de détection (1) présente un dispositif d'émission et de réception supplémentaire, qui communique avec le périphérique (3) muni du dispositif d'affichage et de commande (26, 27).

17. Unité de détection suivant les revendications 12 à 16, dans laquelle la transmission sans fil des données entre l'unité de détection (1) et le périphérique (3) avec dispositif d'affichage et de commande (26, 27) et/ou entre le périphérique (2) avec unité d'évaluation (18) et le périphérique (3) avec dispositif d'affichage et de commande (26, 27) s'effectue suivant le standard WLAN (IEEE 802.11), tel que par exemple le standard 54 Mbps WLAN (IEEE 802.11g), les standard Wireless Personal Area Network (IEEE 802.15) avec plusieurs sous-standard, tels que par exemple Bluetooth, le standard HiperLAN 2, le standard DECT, GSM ou UMTS.

18. Unité de détection suivant les revendications 12 à 17, dans laquelle l'unité de détection (1) échange des données de paramétrage et d'état (25) avec le périphérique (3) muni du dispositif d'affichage et de commande (27).

19. Unité de détection suivant l'une des revendications 1 à 18, dans laquelle l'unité d'évaluation (18) et le dispositif d'affichage et de commande (26, 27) sont intégrés dans un périphérique (33).

20. Unité de détection suivant l'une des revendications 1 à 19, dans laquelle une interface pour la transmission câblée de données est prévue sur l'unité de détection (1).

21. Système de communication de données, comprenant plusieurs unités de détection (1) suivant l'une des revendications 1 à 20 et un périphérique (2) communiquant sans fil avec ces dernières, lequel est couplé à une unité d'évaluation (18).

22. Système de communication de données suivant la revendication 21, dans lequel le système de communication de données comprend le périphérique (3) avec dispositif d'affichage et de commande (26, 27).

23. Périphérique (2), comprenant un dispositif de réception et/ou d'émission, qui est réalisé pour la communication sans fil avec au moins une unité de détection (1) suivant l'une des revendications 1 - 20, une unité d'évaluation (18) étant intégrée dans le périphérique (2) ou le périphérique (2) pouvant être relié à une unité d'évaluation externe (18), et l'unité d'évaluation (18) traitant un signal de mesure numérique (9, 12, 17), reçu par une unité de détection (1), en une valeur de mesure (19).
